# EUROPEAN PATENT APPLICATION

(11) **EP 3 459 399 A1**
(43) Date of publication of application: **27.03.2019**
(21) Application number: 17193159.5
(22) Date of filing: 26.09.2017
(51) Int. Cl.: A47G 23/08, B25J 11/00

(54) **ASSISTING A PERSON TO CONSUME FOOD**

(71) Applicant: Koninklijke Philips N.V., 5656 AE Eindhoven (NL)
(72) Inventor: VAN EE, Raymond, 5656 AE Eindhoven (NL); AARTS, Ronaldus Maria, 5656 AE Eindhoven (NL); VAN LIESHOUT, Ron Martinus Laurentius, 5656 AE Eindhoven (NL); BULUT, Murtaza, 5656 AE Eindhoven (NL)
(74) Representative: de Haan, Poul Erik

(57) **Abstract**

Presented are concepts for assisting a person to consume food from an item of tableware. One such concept comprises a system comprising an asymmetry detection arrangement adapted to detect an asymmetry in an arrangement of food on the item of tableware. A tableware adjustment arrangement of the system is then adapted to move the food, preferably the item of tableware, in response to an asymmetry being detected.

## Description

### FIELD OF THE INVENTION

This invention relates to the field of food consumption and more particularly to assisting a person to consume food from an item of tableware (such as a plate, bowl, dish or saucer for example).

### BACKGROUND OF THE INVENTION

Some individuals may require help or assistance in order to consume food using conventional tableware such a plates, bowl, dishes and the like. For example, persons with a disability or brain injury may find it difficult to consume food from a plate.

In particular, a brain injury, such as stroke, often causes a loss of conscious visual experience. An estimated 45% of stroke survivors have a loss of functional vision to one hemi-field, and this is commonly referred to as hemi-neglect.

By way of example, a person with hemi-neglect in the left visual field (e.g. as a result of suffering a right hemisphere stroke) may only perceive the right half of an object. This may result in the person only eating food on the right side of the plate, and thus leaving food on the left side of the plate (e.g. because they are simply not aware of the left side of the plate). To address this issue, it is known for a caregiver to help such a person to consume food by manually feeding food to the person. This has the drawback of requiring the person to rely on the presence and manual assistance of another individual (such as a family member, caregiver or medical professional for example).

Also, persons with such visual field deficits usually show some spontaneous recovery, thus indicating remaining neural plasticity. Spontaneous recovery is, however, typically only partial and can take years. Rehabilitation training with exercises to attend to the non-functional visual field has proven to be one of the most robust recovery methods. Such training, for example, involves a caregiver placing arrows on the surface surrounding a plate of food so as to indicate the presence of food at various locations on the plate. Again, this has the drawback of requiring the presence and manual assistance of another individual.

Thus, there remains a need for an efficient and/or effective approach to assisting a person to consume food from an item of tableware.

### SUMMARY OF THE INVENTION

The invention aims to at least partly fulfil the aforementioned needs. To this end, the invention provides systems, devices and methods as defined in the independent claims. The dependent claims provide advantageous embodiments.

There is provided a system for assisting a person (a user, a subject) to consume food from an item oftableware. The system comprises an asymmetry detection arrangement adapted to detect an asymmetry in an arrangement of food on the item of tableware. The system also comprises a tableware adjustment arrangement adapted to move the item of tableware in response to an asymmetry being detected.

Proposed is a concept of detecting when food has been left (e.g. un-eaten) on a portion of a tableware item (such as plate, dish, bowl or the like) and then automatically moving the tableware item, so that the portion comprising the food may be perceived by the person for example. Unlike conventional approaches to assisting a person, proposed embodiments may facilitate automated and dynamic movement of tableware so that uneaten food can be brought to the attention of a person (e.g. by being moved into a functional visual field of the person), thereby avoiding the need of manual assistance from another individual (such as a carer). This approach can help to ensure that un-eaten food is seen by a person. It may also be implemented in conjunction with conventional tableware (for example, as an automated turntable or lazy susan) and operate automatically without requiring user input. A concept is thus proposed which can be used in many varying eating environments without requiring assistance or intervention by a carer, family member or medical professional for example. Embodiments may therefore promote improved independence for disabled persons.

Thus, there is proposed approach to assisting a disabled person (such a person with a brain injury) to consume food from a plate which can be automated. Embodiments may therefore be of particular benefit to patient care applications, physical rehabilitation applications, therapeutic applications, nursing homes, hospitals, rehabilitation centres, and home care applications. Some embodiments may be of particular relevance to stroke rehabilitation applications, wherein a person may suffer from hemi-neglect.

In particular, embodiments may be used in relation to a stroke patient (as the person) with hemi-neglect in one side of his/her visual field. Such embodiments may detect an asymmetry in an arrangement of food on the person's plate and then, in response to detecting such an asymmetry, cause the plate to be rotated so as to move uneaten food into the person's functioning visual field.

Furthermore, embodiments may take account of a person's field of view by moving the plate based on the person's field of view. By way of example, an embodiment may determine that a person suffers from hemi-neglect in a right side of his/her visual field (e.g. via an instruction or input signal provided via a user input interface, or via a field of view detection arrangement). Based on this determination, the tableware adjustment arrangement may be controlled so that it moves the plate from left to right so as to move neglected food on the left side of the plate (i.e. in the left-hand side of the person's field of view) to the functioning right-hand side of the person's field of view. Similarly, another embodiment may determine that a person suffers from neglect in an upper part of his/her visual field (e.g. via detecting an asymmetry in food on the plate from top to bottom as viewed by the person) and then, based on this determination, the tableware adjustment arrangement may be controlled so that it moves the plate from top to bottom of the person's field of view (e.g. towards the person) so as to move neglected food on the top portion of the plate (i.e. in the upper portion of the person's field of view) to the functioning lower portion of the person's field of view. Thus, it will be understood that there may be provided a concept of moving an item of tableware based on a field of view of a person.

Also, for training and/or therapeutic goals, embodiments may be repeatedly implemented so that the person becomes repeatedly aware of the uneaten food. After repeated exposure to the previously unperceived part of the plate, the person's brain may learn to perceive the hidden/non-functioning side of the visual field for example. Such embodiments may support person rehabilitation. Improved assistance and rehabilitation may therefore be provided by proposed concepts.

The tableware adjustment arrangement may be adapted to rotate the item of tableware in response to an asymmetry being detected. For instance, the tableware adjustment arrangement may be adapted to rotate the item of tableware by an angle of 180° in response to an asymmetry being detected. Thus, if used in conjunction with a stroke patient with hemi-neglect in one side of his/her visual field, a side of the plate retaining un-eaten food (and thus presumed to be in the non-function side of the visual field) may be automatically moved to the functional side of the person's visual field. Such a tableware adjustment arrangement may, for example, be implemented in a relatively simple manner as a controllable turntable, or lazy susan, upon which the item of tableware is supported. Embodiments may therefore be implemented using simple and cheap components.

The tableware adjustment arrangement may be adapted to rotate the item of tableware at an angular speed of rotation which facilitates gradual awareness of the food by the person. For example, the angular speed of rotation may be less than 2π radians per minute (i.e. at a speed less than one rotation per minute). In some embodiments, the angular speed of rotation is less than π radians per minute (i.e. at a speed less than half of a rotation per minute). Rotation of the item of tableware may therefore be controlled to be undertaken in a slow and controlled manner. By rotating the plate in a slow and gentle way, awareness of the uneaten food may be facilitated without startling or surprising the person, and the person's brain may make new neuronal pathways through new synaptic connections between neurons. Also, slow and gentle rotation may prevent food from falling from the item of tableware.

In some embodiments, the system may further comprise an output interface adapted to output a sensory signal in response to an asymmetry being detected, preferably wherein the sensory signal comprises a visual, audible or tactile signal. For instance, a sensory signal may be provided to accompany the movement of the item of tableware. This extra sensory signal could be a sound signal, a tactile signal, or a light signal for example. The presence of a sensory output signal may increase the number of neurons of the person that are engaged in orienting the focus of visual attention. In some embodiments, the sensory signal may be provided in advance of the movement of the item of tableware so as to alert the person. From neuroscience, it is known that learning is enhanced when an increasing number of neurons are being engaged in an attentional task. The therapeutic value of moving the item of tableware may therefore be enhanced by being accompanied one or more accompanying sensory signals.

In some embodiments, the tableware adjustment unit mat be adapted to receive a control signal that is indicative of a target movement speed and to adjust a speed at which it moves the item of tableware based on the received control signal. For example, the tableware adjustment arrangement may be adapted to adjust the angular speed of rotation at which it rotates the item of tableware in response to such a control signal. Embodiments may therefore be adapted to cater for person-specific requirements and/or preferences. Improved flexibility and/or functionality may thus be provided through an ability of adjust a speed at which the item of tableware is moved or rotated. Further, a feedback unit may be employed for the purpose of generating the control signal. By way of example, the feedback unit may be adapted to detect a change (or rate of change) in detected asymmetry in an arrangement of food on the item of tableware and to then generate a control signal based on the detected change.. A detected change of asymmetry (e.g. its speed and degree) may therefore be used to measure rehabilitation of the person, and this may, in turn, be used to control (e.g. increase or decrease) a degree of support provided to a person by modifying the speed at which the item of tableware is moved. Improved rehabilitation may therefore be facilitated by embodiments through dynamic control and adjustment of their operation according to usage characteristics.

In an embodiment, the asymmetry detection arrangement may comprise a weight detection arrangement adapted to detect an asymmetry in a distribution of the weight of the item of tableware. For example, the weight detection arrangement may comprise first and second pressure sensors for detecting an applied pressure at first and second differing locations of the item of tableware, respectively. A simple weight scale arrangement may thus be provided under the item of tableware which is adapted to measure an asymmetry between the weight on the left and the right side of the item of tableware. This weight measurement may start from a baseline (or reference state) with the item of table filled with food. Once it is detected that there is significant asymmetry in food-weight distribution on the plate, the asymmetry detection arrangement may provide a signal to the tableware adjustment arrangement so as to cause it to move the item of tableware. Relatively simple and cheap technology may thus be used for the asymmetry detection arrangement.

In some embodiments, the asymmetry detection arrangement may comprise a temperature detection arrangement adapted to detect an asymmetry in a distribution of the temperature of the item of tableware. Thus, in addition to using weight sensors (or as an alternative), an asymmetry of eating can be detected using temperature sensors that are arranged to measure a distribution of temperature on plate. It may, for instance, be assumed that an empty side of a plate may have a temperature closer to the environmental/ambient temperature and this can be used to detect if a portion (such as half) of the plate is empty. Again, relatively simple and cheap technology may therefore be used for the asymmetry detection arrangement.

Also, in some embodiments, the asymmetry detection arrangement may comprise a microphone array adapted to detect an asymmetry in a distribution of sound caused by the person consuming food from the item of tableware. For example, using beamforming, the direction of a sound of fork touching the plate may be detected, and if the direction is always the same, this may be considered as an indication of asymmetry in the food distribution on the plate. Known sound-source locating techniques may therefore be implemented by proposed embodiments so as to model a distribution of food on an item of tableware.

By way of further example, the asymmetry detection arrangement may comprise: a video or image capture device adapted to capture a video or image of the food on the item of tableware; and a processor unit adapted to process the captured video or image to detect a visual asymmetry in the arrangement of food on the item of tableware. In this way, simple and widely-available technology may be used for the asymmetry detection arrangement

Some embodiments may comprise a person detection and/or monitoring unit adapted to detect and/or monitor a position of person relative to the item of tableware. Based on positional information obtained by the person detection and/or monitoring unit, the tableware adjustment arrangement may move the item of tableware, e.g. to maintain a predetermined or preferred configuration. For instance, based on a detected position of the person, an embodiment may be adapted to move the item of tableware so as to maintain a predetermined distance and relative position with respect to the person. Embodiments may therefore enable dynamic and/or automatic adjustment of the position of an item of tableware relative to a person, thus further assisting the person to consume food from the item of tableware.

Embodiments may be implemented in, or in conjunction with, an item of tableware. Accordingly, there may be provided an item of tableware comprising a system according to a proposed embodiment. Such an item of tableware may, for example, comprise a plate, a bowl, a dish, a saucer, a serving platter, or the like.

Also, embodiments may be implemented in, or in conjunction with, a turntable (e.g. rotating tray) that is placed on a table or countertop to aid in distributing food. Such a turntable is commonly known a lazy susan. Accordingly, according to an aspect of the invention, there may be provided a lazy susan comprising a system according to a proposed embodiment.

The person may be a patient, disabled person, stroke-sufferer, elderly-person, or a person that has a tendency to leave food in a portion of a tableware item due to being unaware of its presence in that portion (e.g. due to visual and/or cognitive impairment). Embodiments may therefore be or particular benefit for medical, clinical, rehabilitation or patient care applications where the aiding or assisting the consumption of food from an item of tableware may be useful. For instance, proposed embodiments may automatically move an item of tableware so that uneaten food can be perceived by a person (whereas it may have otherwise not been perceived if left unmoved). This may, for example, provide numerous benefits including: reduction in human resource requirement; improvement in person independence; facilitation of rehabilitation processes; and enablement of iterative improvement of awareness.

According to another aspect of the invention, there is provided a computer-implemented method for assisting a person to consume food from an item of tableware, the method comprising: detecting, with an asymmetry detection arrangement an asymmetry in an arrangement of food on the item of tableware; and in response to an asymmetry being detected, controlling a tableware adjustment arrangement to move the item of tableware.

According to another aspect of the invention, there may be provided a computer program product for assisting a person to consume food from an item of tableware, wherein the computer program product comprises a computer-readable storage medium having computer-readable program code embodied therewith, the computer-readable program code configured to perform all of the steps of a method according to a proposed embodiment.

These and other aspects of the invention will be apparent from and elucidated with reference to the embodiment(s) described hereinafter.

### BRIEF DESCRIPTION OF THE DRAWINGS

Examples in accordance with aspects of the invention will now be described in detail with reference to the accompanying schematic drawings, in which:
Figure 1 depicts an exemplary system for assisting a person to consume food from a plate according to an embodiment, wherein Figure 1A depicts the system in a first state (prior the plate being rotated by the system), and wherein Figure 1B depicts the system in a second state (after the plate has been rotated ant-clockwise through an angle of 180° by the system);
Figure 2 is a simplified flow-diagram of a computer-implemented method for assisting a person to consume food from an item of tableware according to an embodiment; and
Figure 3 is a simplified block diagram of a computer within which one or more parts of an embodiment may be employed.

### DETAILED DESCRIPTION OF THE EMBODIMENTS

Proposed is a concept for assisting a person to consume food from an item of tableware (such as plate, dish, bowl or the like). One or more portions of a tableware item containing un-eaten food may be detected and then the tableware item may be moved based on the detected one or more portions. In this way, un-eaten food may be moved so as to be within a functioning field of vision of a person for example, thereby enabling the person to see or perceive the un-eaten food. By moving the item of tableware automatically (e.g. without requiring a person such as the person or his/her carer to move the item of tableware), uneaten food can be brought to the attention of the person without needing manual assistance or intervention from another individual (such as a carer). For example, a plate of food may be slid or displaced horizontally so as to move uneaten food from a first position (wherein the food was not seen or perceived by the person) to a second position (wherein the food can be seen or perceived by the person), the second position being laterally offset from the first position. In other embodiments, a plate of food may be rotated about a central axis, effectively resulting in the uneaten food being moved from one side of a plate's central location to the other side of the plate's central location. Proposed embodiments may therefore be designed to affect many different types of movement of an item of tableware in response to detecting a portion of uneaten food on the item of tableware, wherein such movement may comprise linear movement, non-linear movement, horizontal movement, vertical movement and/or rotational movement.

Proposed embodiments can employ an approach of detecting an asymmetry in an arrangement of food on an item of tableware. Such a proposed approach can help to identify a side of an item of tableware that has been neglected (e.g. not perceived) by a person due to a non-functioning portion of his/her field of view. Based on such an identification of a non-functioning portion of the person's field of view, the proposed approach can then move the item of tableware so as to move the food into the person's functional visual field (i.e. functioning portion of the person's field of view).

Embodiments may thus enable a single person to consume a full plate of food without requiring another person to assist in moving or turning the place of food. Improved independence and reduced human resource requirements may therefore be facilitated by proposed embodiments.

Embodiments of the present invention are therefore directed toward enabling a stroke patient with hemi-neglect in one side of his/her visual field to be made aware of uneaten food on one side of a tableware item so as to facilitate or enhance a rehabilitation process. Further, embodiments may be aimed at enabling independent living of disabled persons (such as stroke patients for example). Indeed, it is envisaged the repeated use of proposed embodiments may help a person to overcome a visual neglect. For example, through the provision of a sensory signal accompanying movement of a plate (in response to detecting a portion of uneaten food on a plate), a learning process of a person may be implemented in a manner which aims to provide suitable person engagement and/or awareness.

Embodiments are based on the insight that detection of asymmetry in an arrangement of food on an item of tableware may be used to cause and/or control automated movement of the item of tableware. Some proposed embodiments may therefore be thought of as providing an apparatus or arrangement of components that can be used in conjunction with a conventional item of tableware so as to automatically move the item of tableware when it is deemed appropriate so as to assist person in consuming food from the item of tableware. Other proposed embodiments may be implemented as part of (e.g. integrated within) an item of tableware. In this way, a new type of tableware item may be provided which is adapted to move (e.g. spin, rotate, or slide) when it determines that an arrangement of food it is supporting is asymmetric (e.g. comprises portions of un-eaten food).

By way of example only, illustrative embodiments may be utilized in many different types of clinical, medical or patient-related environments, such as a hospital, doctor's office, ward, care home, person's home, etc. In order to provide a context for the description of elements and functionality of the illustrative embodiments, the Figures are provided hereafter as examples of how aspects of the illustrative embodiments may be implemented. However, it should be appreciated the Figures are only examples and are not intended to assert or imply any limitation with regard to the environments, systems or methods in which aspects or embodiments of the present invention may be implemented. For example, embodiments may not be limited to rotating a plate, but may instead be used in conjunction with other types or tableware and may slide or translate the tableware in a particular direction.

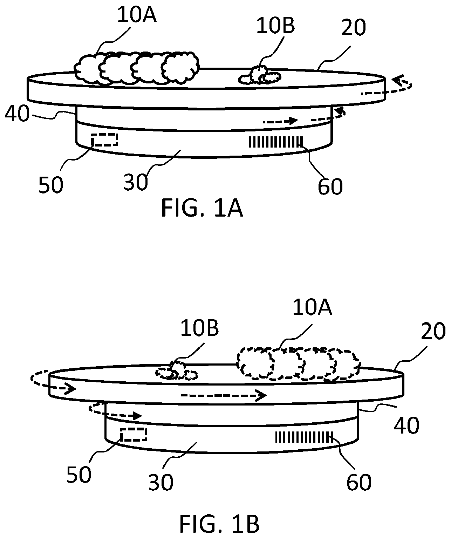

Referring now to Figure 1, there is depicted an exemplary system for assisting a person to consume food 10 from a plate 20 according to an embodiment. Here, the system is integrated into a turntable (e.g. rotating support surface) that is adapted to be placed on a table or countertop to aid in distributing food from a plate positioned/supported on the turntable. The turntable may be thought of as 'smart' or 'automated' lazy susan. Figure 1A depicts the system in a first state (prior the plate 20 being rotated by the system), and Figure 1B depicts the system in a second state (after the plate 20 has been rotated anti-clockwise through an angle of 180° by the system).

In this example, a plate 20 of food 10 is positioned on top of the system, and a stroke patient with hemi-neglect in the left side of his/her visual field (i.e. a person who has suffered a right hemisphere stroke) consumes food 10 from the plate. Due to the hemi-neglect in the left side of his/her visual field, the person only perceives food 10B on the right-hand side of the plate 20, and therefore leaves the food 10A on the left-hand side of the plate uneaten. An asymmetry in the arrangement of the food 10 on the plate 20 thus results from the person consuming food 10 from the plate 20.

The system comprises an asymmetry detection arrangement 30 that is adapted to detect an asymmetry in an arrangement of food 10 on the plate 20. More particularly, in this example, the asymmetry detection arrangement 30 comprises a weight detection arrangement 30 that is adapted to detect an asymmetry in a distribution of the weight of the plate 20. Here, the weight detection arrangement 30 comprises a plurality of pressure sensors (not visible) for detecting an applied pressure at a respectively plurality of differing locations of the plate.

Upon detecting asymmetry in the arrangement of the food 10 on the plate 20, the asymmetry detection arrangement 30 generates a control signal which is adapted to control a tableware adjustment arrangement 40 of the system to rotate the plate 20. In this example, the tableware adjustment arrangement 40 comprises a motor-driven circular platform 40 adapted to support the plate 20. Rotation of the circular platform (e.g. by operation of a motor and gear arrangement) thus causes the plate 20 to rotate.

More specifically, the tableware adjustment arrangement 40 of the embodiment of Figure 1 is adapted to rotate the plate counter-clockwise by an angle of 180° (i.e. half a rotation) in response to an asymmetry being detected by the asymmetry detection arrangement 30. This causes the system to be moved from a first state (depicted in Figure 1A, wherein uneaten food is positioned on the left-hand side of the plate within the non-functioning visual field of the person) to a second state (depicted in Figure 1B wherein the uneaten food is positioned on the right-hand side of the plate within the functioning visual field of the person). In this way, uneaten food is moved to the functioning visual field of the person so that he/she is made aware of the uneaten food.

In the depicted embodiment, the tableware adjustment arrangement 40 is adapted to rotate the plate 20 at an angular speed of rotation which facilitates gradual awareness of the food by the person. For instance, the tableware adjustment arrangement 40 is adapted to rotate the plate 20 in a slow and gentle manner, such as at an angular speed of rotation less than 2π radians per minute. This rotation speed of less than one rotation per minute is, however, only exemplary, and other embodiments may be adapted to rotate the plate at a faster speed. Also, other embodiments may be adapted to rotate the plate at a slower speed, such as at angular speed of rotation less than π radians per minute (i.e. less than half a rotation per minute), or slower.

Furthermore, the tableware adjustment arrangement 40 is adapted to adjust the angular speed of rotation at which it rotates the plate in response to a signal. For this purpose, the system further comprises a feedback unit 50 adapted to detect a change in detected asymmetry in an arrangement of food 10 on the plate 20 and to generate a control signal based on the detected change. The control signal is provided to the tableware adjustment arrangement 40 and adapted to instruct the tableware adjustment arrangement 40 how to adjust the speed at which the plate 20 is rotated (e.g. whether to slow down, speed up, stop or otherwise modify the rotation).

The system also comprises an output interface 60 adapted to output a sensory signal in response to an asymmetry being detected. In the depicted example of Figure 1, the output interface 60 comprises a speaker adapted to output an audible signal (e.g. a beep or bleeping sound) that is indicative of the rotation of the plate 20.

From the above description, it will be appreciated that, in a first proposed embodiment, there is provided a weighing arrangement underneath the plate that is adapted to measure an asymmetry between the weight on the left and the right of the plate. This weight measurement be referenced against a baseline (or reference) measurement of the plate filled with food. Once it is determined that there is significant asymmetry in the food-weight distribution on the plate, the system rotates the plate 180°.

Proposed embodiments may be used for training/therapeutic goals via gentle and/or gradual rotation of the plate (or other item of tableware). If rotation is sufficiently slow so that the eyes of the person are able to pursue the rotating food, this may facilitate awareness of the food in the previously neglected/blind visual field. By continuously rotating the plate in a gentle way, awareness will be facilitated, and the brain of the person may make new neuronal pathways through new synaptic connections between neurons.

It will be appreciated that movement of the plate may be affected via various mechanical or electro-mechanical arrangements. Mechanical arrangements may, for instance, employ one or more springs and/or winding mechanisms, so as to avoid the use of electrical wires and/or electrical power sources.

Also, it may be preferable to adapt movement of the item of tableware to be sufficiently slow so that the eyes of a person are able to pursue the rotating food, thereby attending to the visual hemi-field that was previously unattended. It is also noted that gentle rotation will help to prevent that food falling from the tableware.

In yet another embodiment, the system may be personalized to the preferences of individual persons. For example, embodiments may be adapted to provide sound to accompany movement of the item of tableware, such as the sound of a bird-song, water, rain, or music. Also, a visual output signal light may be provided to accompany movement of the item of tableware, with a colour and/or intensity of light being emitted.

In yet another embodiment, the creation of asymmetry (e.g. a speed and degree) may be used to assess rehabilitation of the person. Such measurements and/or assessment may be used to modify (e.g. increase or decrease) a degree of support, thereby facilitating a rehabilitation process.

Although the embodiment depicted in Figure 1 comprises a weight detection arrangement that is adapted to detect an asymmetry in a distribution of the weight of the plate, other embodiments may employ different approaches to detecting an asymmetry in an arrangement of food on an item of tableware.

For example, in another embodiment, the asymmetry detection arrangement may employ a temperature detection arrangement adapted to detect an asymmetry in a distribution of the temperature of the item of tableware. An asymmetry of eating may then be detected using temperature sensors that measure a distribution of temperature across a plate or dish for example.

In other embodiments, the asymmetry detection arrangement may comprise a microphone array adapted to detect an asymmetry in a distribution of sound caused by the person consuming food from the item of tableware. Using beamforming, the direction of a fork touching the tableware may be detected for example, and, if the direction is always the same, this can be considered as an indication of visual neglect.

In other embodiments, the asymmetry detection arrangement may comprise a video or image capture device adapted to capture a video or image of the food on the item of tableware. A processor unit (such as a graphics processing unit) may then be employed to process the captured video or image to detect a visual asymmetry in the arrangement of food on the item of tableware. However, such an embodiment may not be preferable where there are concerns about privacy issues of the person for example.

Furthermore, embodiments may be adapted to detect and monitor the distance and/or position of the item of tableware and person relative to each other, and the relative positioning of the item of tableware and person may be adjusted so as to maintain a predetermined or preferred configuration. For instance, based on a detected position of the person, an embodiment may be adapted to move the item of tableware so as to maintain a predetermined distance and relative position with respect to the person. Dynamic and automatic adjustment of the position of an item of tableware relative to a person may therefore be provided by proposed embodiments.

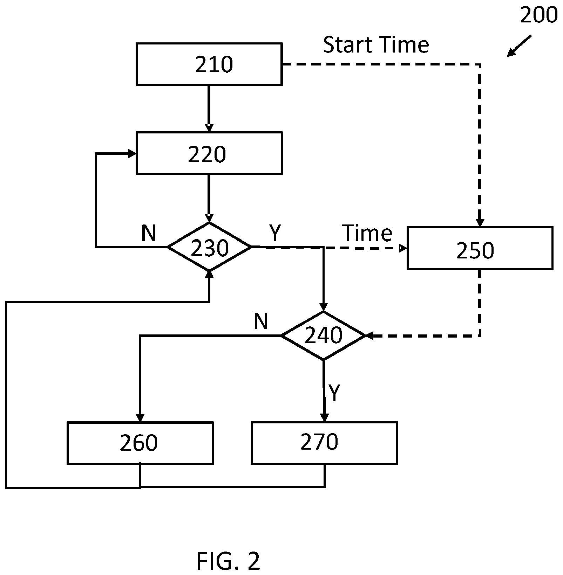

Referring now to Figure 2, there is depicted a simplified flow-diagram of a computer-implemented method 200 for assisting a person to consume food from an item of tableware. The method begins with the step 210 of detecting the start of consumption of food from the item of tableware. In other words, step 210 comprises detecting when a person starts eating food from the item of tableware.

Upon detecting the start of food consumption, the method proceeds to step 220 wherein an asymmetry of an arrangement of food on the item of tableware is measured. The obtained measure of asymmetry is then compared or checked against a predetermined threshold value so as to determine if an asymmetry is detected in step 230. If it is determined in step 230 that no asymmetry (or insufficient asymmetry) is detected, the method returns to step 220 to obtain a new or updated measure of asymmetry. If it is determined in step 230 that asymmetry (or sufficient asymmetry) is detected, the method proceed to step 240.

Also, the time at which the start of food consumption was detected (from step 210) is provided to step 250 along with the time at which asymmetry was detected in step 230. In step 250, the received time information (regarding the start time of consumption and time of detected asymmetry) is used to determine a speed at which the asymmetry has been established. This speed information is then passed to step 240, wherein it is determined whether the detected occurrence of asymmetry represents a deviation from a previous asymmetry event.

If it is determined in step 240 that deviation from a previous asymmetry event has not occurred, the method proceeds to step 260 wherein a tableware adjustment arrangement is controlled so as to move the item of tableware according to default or predetermined settings (such as at a fixed speed in a predetermined direction). If it is determined in step 240 that deviation from a previous asymmetry event has occurred, the method proceeds to step 270 wherein a tableware adjustment arrangement is controlled so as to move the item of tableware according to new, optimized settings based on the detected deviation. In this way, the movement of the item of tableware may be controlled according to detected events and/or characteristics so as to modify and improve a rehabilitation process.

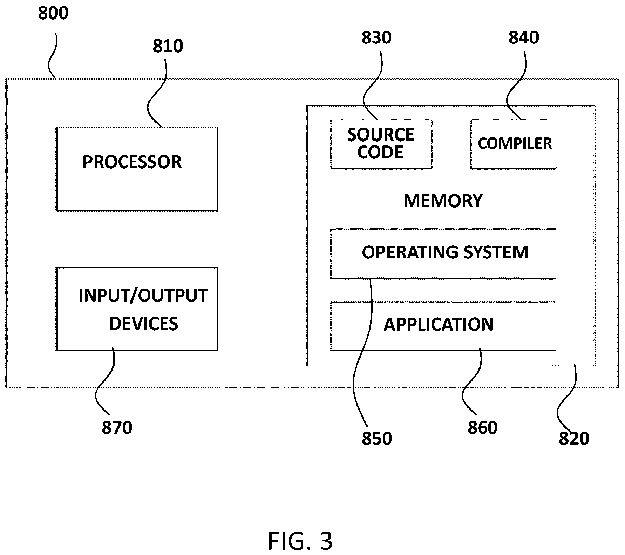

Figure 3 illustrates an example of a computer 800 within which one or more parts of an embodiment may be employed. Various operations discussed above may utilize the capabilities of the computer 800. For example, one or more parts of a system for assisting a person to consume food from an item of tableware may be incorporated in any element, module, application, and/or component discussed herein.

The computer 800 includes, but is not limited to, PCs, workstations, laptops, PDAs, palm devices, servers, storages, and the like. Generally, in terms of hardware architecture, the computer 800 may include one or more processors 810, memory 820, and one or more I/O devices 870 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 840, source code 830, and one or more applications 860 in accordance with exemplary embodiments. As illustrated, the application 860 comprises numerous functional components for implementing the features and operations of the exemplary embodiments. The application 860 of the computer 800 may represent various applications, computational units, logic, functional units, processes, operations, virtual entities, and/or modules in accordance with exemplary embodiments, but the application 860 is not meant to be a limitation.

The operating system 850 controls the execution of other computer programs, and provides scheduling, input-output control, file and data management, memory management, and communication control and related services. It is contemplated by the inventors that the application 860 for implementing exemplary embodiments may be applicable on all commercially available operating systems.

Application 860 may be a source program, executable program (object code), script, or any other entity comprising a set of instructions to be performed. When a source program, then the program is usually translated via a compiler (such as the compiler 840), assembler, interpreter, or the like, which may or may not be included within the memory 820, so as to operate properly in connection with the O/S 850. Furthermore, the application 860 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 870 may include input devices such as, for example but not limited to, a mouse, keyboard, scanner, microphone, camera, etc. Furthermore, the I/O devices 870 may also include output devices, for example but not limited to a printer, display, etc. Finally, the I/O devices 870 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 870 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at startup, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 860 and the O/S 850 are read, in whole or in part, by the processor 810, perhaps buffered within the processor 810, and then executed.

When the application 860 is implemented in software it should be noted that the application 860 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 860 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the person's computer, partly on the person's computer, as a stand-alone software package, partly on the person's computer and partly on a remote computer or entirely on the remote computer or server. In the latter scenario, the remote computer may be connected to the person's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The description has been presented for purposes of illustration and description, and is not intended to be exhaustive or limited to the invention in the form disclosed. Many modifications and variations will be apparent to those of ordinary skill in the art. Embodiments have been chosen and described in order to best explain principles of proposed embodiments, practical application(s), and to enable others of ordinary skill in the art to understand various embodiments with various modifications are contemplated.

## Claims

1. A system for assisting a person to consume food from an item oftableware, the system comprising:
an asymmetry detection arrangement adapted to detect an asymmetry in an arrangement of food on the item of tableware; and
a tableware adjustment arrangement adapted to move the food in response to an asymmetry being detected.

2. The system of claim 1, wherein the tableware adjustment arrangement is adapted to move the item of tableware, thereby moving the food.

3. The system of claim 2, wherein the tableware adjustment arrangement is adapted to rotate the item of tableware in response to an asymmetry being detected.

4. The system of claim 3, wherein the tableware adjustment arrangement is adapted to rotate the item of tableware by an angle of 180° in response to an asymmetry being detected.

5. The system of claim 3 or 4, wherein the tableware adjustment arrangement is adapted to rotate the item of tableware at an angular speed of rotation which facilitates gradual awareness of the food by the person.

6. The system of any preceding claim, further comprising:
an output interface adapted to output a sensory signal in response to an asymmetry being detected.

7. The system of any preceding claim, further adapted to obtain an indication of a field of view of the person, and wherein the tableware adjustment arrangement is further adapted to move the food based on the indication of the field of view of the person.

8. The system of claims 2 to 6, wherein the tableware adjustment arrangement is adapted to receive a control signal that is indicative of a target movement speed and to adjust a speed at which it moves the item of tableware based on the received control signal.

9. The system of any preceding claim, wherein the asymmetry detection arrangement comprises a weight detection arrangement adapted to detect an asymmetry in a distribution of the weight of the item of tableware, preferably wherein the weight detection arrangement comprises first and second pressure sensors for detecting an applied pressure at first and second differing locations of the item of tableware, respectively.

10. The system of any preceding claim, wherein the asymmetry detection arrangement comprises a temperature detection arrangement adapted to detect an asymmetry in a distribution of the temperature of the item of tableware.

11. The system of any preceding claim, wherein the asymmetry detection arrangement comprises a microphone array adapted to detect an asymmetry in a distribution of sound caused by the person consuming food from the item of tableware.

12. The system of any preceding claim, wherein the asymmetry detection arrangement comprises:
a video or image capture device adapted to capture a video or image of the food on the item of tableware; and
a processor unit adapted to process the captured video or image to detect a visual asymmetry in the arrangement of food on the item of tableware.

13. An item of tableware comprising a system according to any preceding claim, preferably wherein the item of tableware comprises a plate, a bowl, a dish, or a saucer.

14. A lazy susan comprising a system according to any of claims 1 to 12.

15. A computer-implemented method for assisting a person to consume food from an item of tableware, the method comprising:
detecting, with an asymmetry detection arrangement, an asymmetry in an arrangement of food on the item of tableware; and
in response to an asymmetry being detected, controlling a tableware adjustment arrangement to move the food.

16. A computer program product for assisting a person to consume food from an item of tableware, wherein the computer program product comprises a computer-readable storage medium having computer-readable program code embodied therewith, the computer-readable program code configured to perform all of the steps of claim 15.
